# EUROPÄISCHE PATENTSCHRIFT

(11) **EP 2 824 373 B1**
(45) Veröffentlichungstag und Bekanntmachung des Hinweises auf die Patenterteilung: **29.06.2016**
(21) Anmeldenummer: 14176793.9
(22) Anmeldetag: 11.07.2014
(51) Int. Cl.: F16K 31/04

(54) **Kupplung für einen Stellungsregler**
Coupling for a position regulator
Couplage pour un positionneur

(30) Priorität: 12.07.2013 DE 102013107427
(43) Veröffentlichungstag der Anmeldung: 14.01.2015
(73) Patentinhaber: Samson AG, 60314 Frankfurt (DE)
(72) Erfinder: Valentin-Rumpel, Frank, 64823 Groß-Umstadt (DE)
(74) Vertreter: Puschmann Borchert Bardehle Patentanwälte Partnerschaft mbB

(56) Entgegenhaltungen:
- DE-B3-102005 003 771

## Beschreibung

Die Erfindung betrifft eine Kupplung für einen Stellungsregler zur Ankopplung eines Stellungsreglers an eine Stellarmatur.

Ein Stellungsregler benötigt zur Positionsregelung die Position des Stellglieds der Stellarmatur. Zur Übertragung der Bewegung des Stellglieds der Stellarmatur auf den Stellungsreglers wird, insbesondere bei einer mechanischen Übertragung, eine Kupplung verwendet.

Bei der Montage eines Positionsaufnehmers an einem Stellgerät ist es vorteilhaft, wenn dieser eine Montageposition aufweist. Die DE 10 2005 003 771 A1 beschreibt die Ankopplung einer Stellarmatur an einen Positionsaufnehmer eines Stellungsreglers. Gemäß dieser ist eine Übertragungseinrichtung vorgesehen, die zur leichteren Montage in einer Montageposition fixierbar ist. Nach Freigabe der Übertragungseinrichtung kann ein fehlerfreier Betrieb gewährleistet werden, da nach der Montage ausreichend Bewegungsspielraum im Stellungsregler zur Verfügung steht.

Der Erfindung liegt die Aufgabe zu Grunde eine Kupplung anzugeben, die eine initiale Montageposition bereitstellt und sich sowohl für Dreh- als auch Membranantriebe eignet.

Eine erfindungsgemäße Kupplung zur Verbindung eines Stellantriebs mit einem Stellungsregler, umfasst ein erstes Bauteil, welches insbesondere mit einem Stellungsreglergehäuse verbindbar ist, ein zweites Bauteil, welches insbesondere mit der Stellarmatur verbindbar ist, und einen federbelasteten Mitnehmer, der federnd mit dem ersten Bauteil verbunden ist. Ferner ist das zweite Bauteil drehbar gegenüber dem ersten Bauteil angeordnet, wobei das zweite Bauteil in einer ersten Drehrichtung - Freilaufrichtung- und einer dieser entgegengesetzten zweiten Drehrichtung -Sperrrichtung - drehbar ist. Das zweite Bauteil weist ein Führungsmittel auf, das derart gestaltet ist, dass der federbelasteter Mitnehmer bei Drehung des zweiten Bauteils in Freilaufrichtung nicht mit dem Führungsmittel in Eingriff gelangt. Das Führungsmittel ist so gestaltet, dass bei Drehung des zweiten Bauteils in Sperrrichtung der Mitnehmer mit dem Führungsmittel in Eingriff gelangt. Auf diese Weise wird der federbelastete Mitnehmer von dem Führungsmittel in Sperrrichtung gegen eine Federkraft mitgenommen.

Das erste Bauteil weist eine erste Anschlagsfläche auf, an welcher der federbelastete Mitnehmer in seiner Ausgangsposition - bei Drehung des zweiten Bauteils in Freilaufrichtung - anliegt. Diese Position gewährleistet eine einfache Montage da ein justierter Eingriff in einer festen Stellung ermöglicht wird.

Ferner weist das erste Bauteil eine zweite Anschlagsfläche auf, gegen welche der federbelastete Mitnehmer durch das Führungsmittel am zweiten Bauteil bei Drehung in Sperrrichtung geführt wird. An der zweiten Anschlagsfläche wird der federbelastete Mitnehmer derart geführt, dass bei Drehung in Sperrrichtung der durch das Führungsmittel des zweiten Bauteils geführte federbelastete Mitnehmer derart bewegt wird, dass gegen eine Federkraft der Eingriff des federbelasteten Mitnehmers mit dem Führungsmittel gelöst wird. Auf diese Weise wird eine Überlastsicherung bereitgestellt, die durch lösen des Eingriffs eine Zerstörung des die Federvorspannung in Drehrichtung erzeugenden Elements verhindert. Durch die Beabstandung von erster zu zweiter Anschlagfläche kann die Größe des Bereichs in dem das zweite Bauteil gegen eine Federvorspannung bei Drehung in Sperrrichtung drehbar ist gewählt werden.

Nach Lösung des Eingriffs bewegt sich der federbelaste Mitnehmer aufgrund der Federvorspannung wieder in seine Ausgangslage an die erste Anschlagsfläche zurück.

Durch die erfindungsgemäße Ausgestaltung ist eine Kupplung geschaffen, welche in einer ersten Drehrichtung einen Bereich einer federbelasteten Vorspannung aufweist und bei Überdrehen in dieser Richtung eine Überlastsicherung vorgesehen ist, und bei Drehung in die entgegengesetzte Richtung eine Art Leerlauf vorliegt. Durch den definierten Ausgangspunkt liegt eine eindeutige Montageposition vor.

In einer besonders kompakten Bauform der Kupplung kann das erste Bauteil koaxial zum zweiten Bauteil angeordnet sein. In dieser Ausgestaltung kann vorzugsweise der federbelastete Mitnehmer als freier Federschenkel einer Schenkelfeder ausgebildet sein. Insbesondere ist die Schenkelfeder mit ihrem ersten Ende am ersten Bauteil fixiert und mit ihrem zweiten Ende, freier Federschenkel ausgestellt ist, der als Mitnehmer fungiert und mit dem Führungsmittel des zweiten Bauteils in Eingriff gelangen kann.

Bei der koaxialen Bauform der beiden Bauteile erweist es sich als vorteilhaft, wenn das zweite Bauteil ein Führungsmittel in Form einer Erhebung in Richtung des ersten Bauteils aufweist. Diese Erhebung weist in Freilaufrichtung eine Flanke auf und fällt in Sperrrichtung steil ab. Der freie Federschenkel wird auf diese Weise durch die Erhebung bei Drehung des zweiten Bauteils in Sperrrichtung mitgenommen, da durch die Schenkelfeder sowohl eine Kraft in axialer Richtung als auch in tangentialer Richtung ausgeübt wird. Ferner weist in dieser Ausgestaltung das erste Bauteil an seiner zweiten Anschlagsfläche eine Überlastrampe auf, die derart gestaltet ist, dass bei Drehung des zweiten Bauteils in Sperrrichtung der freie Federschenkel so weit in Richtung des ersten Bauteils geschoben wird, bis der freie Federschenkel über die Erhebung hinweggleitet. Auf diese Weise kann ein Überlastschutz dadurch gewährleitet werden, dass der freie Federschenkel gegen seine axial wirkende Kraft über die Erhebung geführt wird.

Vorzugsweise kann eine solche Überlastrampe in Baueinheit mit dem zweiten Anschlag des ersten Bauteils ausgebildet sein.

In einer weiteren Ausführungsform ist zwischen erstem Bauteil und zweitem Bauteil ein koaxial zu beiden Bauteilen liegender Ring vorgesehen. Dieser ist drehbar gegenüber dem ersten Bauteil und dem zweiten Bauteil geführt.

Der Ring weist einen ersten Ringanschlag auf, der in Freilaufrichtung eine erste Ringanschlagsfläche besitzt, die mit der ersten Anschlagsfläche des ersten Bauteils in Freilaufrichtung in Kontakt bringbar ist. Der der erste Ringanschlag liegt mit seiner zweiten Ringanschlagsfläche in seiner Ausgangslage am freien Federschenkel an. Der Ringanschlag liegt somit zwischen dem ersten Anschlag des ersten Bauteils und dem freien Federschenkel. Dies hat den Vorteil, dass der Ringanschlag aus einem belastbareren Material gefertigt werden kann als das erste Bauteil. Durch den Ringanschlag ergibt sich insbesondere bei Anpassung an die erste Anschlagsfläche des ersten Bauteils, eine Dämpfung des bei Überlast zurückfedernden freien Federschenkels. Dadurch kann die Lebensdauer der Kupplung auf einfache Weise erhöht werden.

Gemäß einer weiteren Ausgestaltung kann zwischen dem ersten Bauteil und zweiten Bauteil ein Ring vorgesehen sein, der koaxial drehbar gegenüber dem ersten und zweiten Bauteil geführt ist. Der Ring weist einen zweiten Ringanschlag auf, der in Sperrrichtung ansteigend die Überlastrampe bildet und im weiteren Verlauf eine Ringanschlagsfläche bildet, die in Kontakt mit der zweiten Anschlagsfläche des ersten Bauteils bringbar ist. Auf diese Weise kann der freie Federschenkel auf dem Ring geführt werden, wobei der Ring in Sperrrichtung so lange mitgedreht wird, bis die Ringanschlagfläche an der zweiten Anschlagfläche des ersten Bauteils anliegt. Eine weitere Drehung des zweiten Bauteils zwingt dann den freien Federschenkel auf die Überlastrampe des Rings, wodurch der freie Federschenkel aus dem Eingriff mit der Erhebung des zweiten Bauteils gelöst wird.

Eine besonders vorteilhafte Ausführungsform ergibt sich für eine Kupplung, bei welcher koaxial zwischen erstem Bauteil und zweitem Bauteil ein Ring vorgesehen ist, der drehbar gegenüber dem ersten Bauteil und dem zweiten Bauteil geführt ist. Der Ring kann mit einem ersten Ringanschlag versehen sein, der in Freilaufrichtung eine erste Ringanschlagsfläche aufweist, die mit der ersten Anschlagsfläche des ersten Bauteils in Freilaufrichtung in Kontakt bringbar ist.

Der erste Ringanschlag liegt in einer Ausgangslage zwischen dem freien Federschenkel und der ersten Anschlagsfläche des ersten Bauteils. Der Ring umfasst zudem einen zweiten Ringanschlag, der in Sperrrichtung beabstandet zum ersten Ringanschlag liegt und der zweite Ringanschlag in Sperrrichtung ansteigend die Überlastrampe bildet und im weiteren Verlauf eine zweite Ringanschlagsfläche bildet, die in Kontakt mit der zweiten Anschlagsfläche des ersten Bauteils bringbar ist. Auf diese Weise können die Vorteile eines ersten Ringanschlags zur Dämpfung der Rückfederung des freien Federschenkels und der mitdrehbaren Überlastrampe verbunden werden.

Vorzugsweise kann die Schenkelfeder derart angeordnet sein, dass die Schenkelfederachse koaxial zu erstem und zweitem Bauelement liegt. Dadurch wird eine besonders kompakte Bauform der Kupplung erreicht.

Gemäß einer weiteren Verbesserung kann das erste Bauteil teilweise zylinderförmig ausgebildet sein, wobei der zylinderförmige Teil den Kern der Schenkelfeder durchragt. Dies sorgt für eine Stützung der Schenkelfeder.

In einer weiteren Ausgestaltung kann die Erhebung des zweiten Bauteils radial innenliegend zu den Anschlagsflächen des ersten Bauteils verlaufen. Auf diese Weise kann die Schenkelfeder das erste Bauteil umspannen, wobei der freie Federschenkel als Mitnehmer nach innen gerichtet ist und auf diese Weise bei Drehung in Sperrrichtung von der Erhebung gegen die Federkraft der Schenkelfeder mitgenommen werden kann. Dies erlaubt eine einfache Umsetzung der erfindungsgemäßen Kupplung.

Des Weiteren betrifft die Erfindung einen Stellungsregler, wobei der Stellungsregler eine zuvor beschriebene Kupplung umfasst, über welche der Stellungsregler mit einer Stellarmatur verbindbar ist. Durch die Integration der erfindungsgemäßen Kupplung in den Stellungsregler kann ein universeller Stellungsregler bereitgestellt werden, der sich sowohl für die Regelung von Drehantrieben als auch Linearantrieben, wie sie insbesondere bei Membranantrieben üblich sind verwendbar sind

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine schematische Ansicht einer Kupplung zur Anbindung einer Stellarmatur;
- Fig. 1a: eine schematische Vorderansicht einer Kupplung;
- Fig. 2: eine weitere Ausgestaltung einer erfindungsgemäßen Kupplung;
- Fig. 2a: eine schematische Draufsicht auf eine Kupplung gemäß Fig. 2;
- Fig. 3a: eine schematische Ansicht eines Kupplungselements;
- Fig. 3b: eine schematische Ansicht eines Kupplungselements, und
- Fig. 3c: eine schematische Ansicht eines Kupplungselements.

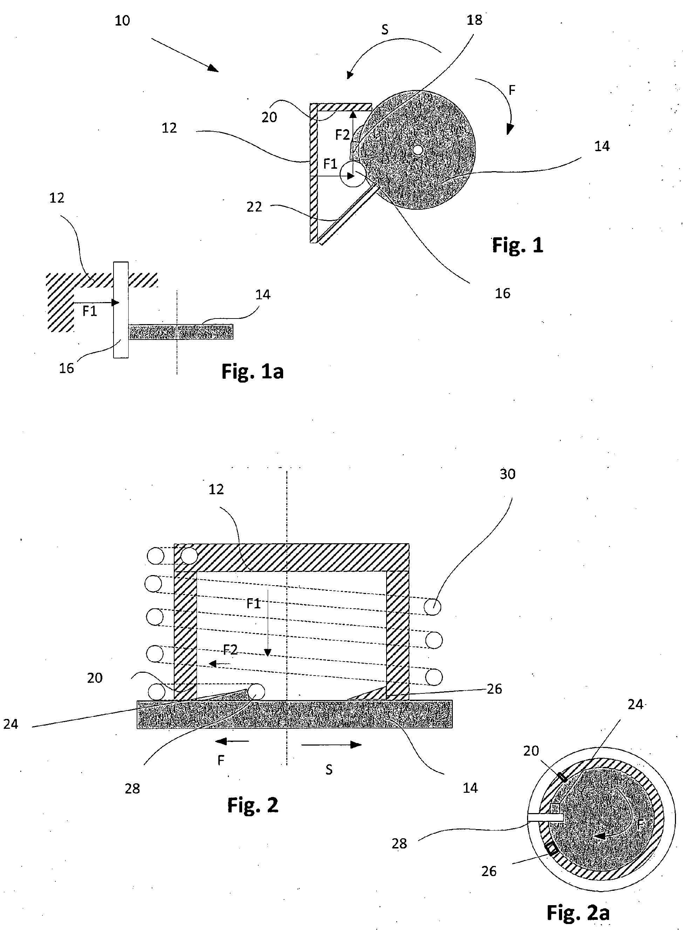

- Fig. 1: zeigt eine schematische Ansicht einer Kupplung zur Anbindung einer Stellarmatur an einem Stellungsregler.

Die Kupplung 10 umfasst ein erstes Bauteil 12 sowie ein relativ zum ersten Bauteil drehbares zweites Bauteil 14. Ferner ist ein Mitnehmer 16 vorgesehen, welcher gegenüber dem ersten Bauteil 12 federbelastet gelagert ist. Die Wirkung der Federbelastung F1, F2 ist anhand der Pfeile dargestellt.

Ferner weist das erste Bauteil 12 eine erste Anschlagsfläche 20 sowie eine zweite Anschlagsfläche 22 auf. Die Federkräfte F1, F2 sind derart gewählt, dass bei einer Drehung des zweiten Bauteils 14 in Freilaufrichtung F der federbelastete Mitnehmer 16 an der ersten Anschlagsfläche 20 anliegt. Das zweite Bauteil 14 weist ein Führungsmittel 18 auf, dass bei Drehung in Sperrrichtung S den Mitnehmer 16 gegen die Federkraft F2 tangential mitnimmt. In diesem Bereich ist das Bauteil 14 mit der Vorspannung der Feder F2 beaufschlagt. Dies gilt für den Bereich von ersten Anschlagsfläche 20 bis zur zweiten Anschlagsfläche 22. An der zweiten Anschlagsfläche 22 wird aufgrund der Drehbewegung in Sperrrichtung S der Mitnehmer 16 derart abgelenkt, dass dieser nicht mehr länger in das Führungsmittel 18 eingreift. Dadurch bewegt sich der federbelastete Mitnehmer 16 nach Ablenkung durch die zweite Anschlagsfläche 22 über das Führungsmittel 18 hinweg wieder zurück zur ersten Anschlagsfläche 20. Dies stellt wiederum die Ausgangsposition dar.

Um den Eingriff während der Drehung zu garantieren, wirkt auf den federbelasteten Mitnehmer 16 radial die Federkraft F1, gegen welche der federbelastete Mitnehmer 16 an der zweiten Anschlagsfläche 22 verdrängt wird.

Auf diese Weise ist eine Kupplung zur Ankupplung einer Stellarmatur an einen Stellungsregler gegeben, die ein Bewegungsverhalten einer Drehung in Freilaufrichtung F in unbegrenztem Drehwinkel ermöglicht, auf der anderen Seite bei einer Drehung in Sperrrichtung S einen Bereich mit einer Federvorspannung vorgibt. Und trotzdem einen Überlastschutz bei Drehung in Sperrrichtung S gewährleistet.

Fig. 1a zeigt eine schematische Vorderansicht einer Kupplung 10 nach Fig. 1, wobei hier das zweite Bauteil 14 derart dargestellte ist, dass es den federbelasteten Mitnehmer 16 gegen die Federkraft F2 mitnimmt, wobei auch die Federkraft F1 gegenüber dem ersten Bauteil 12 wirkt und den federbelasteten Mitnehmer 16 in Eingriff mit dem zweiten Bauteil 14 hält.

Fig. 2 zeigt eine weitere Ausgestaltung einer erfindungsgemäßen Kupplung zur Verbindung eines Stellgerätes mit dem zweiten Bauteil 14. Gemäß der Ausgestaltung von Fig. 2 umfasst die Kupplung ein zylinderförmiges erstes Bauteil 12, an welchem eine Schenkelfeder 30 befestigt ist. Gegenüber dem ersten Bauteil 12 ist koaxial ein zweites Bauteil 14 drehbar gelagert. Das zweite Bauteil 14 ist gegenüber dem ersten Bauteil 12 in einer Freilaufrichtung F und in eine Sperrrichtung S drehbar. Das erste Bauteil 12 weist an seinem linken Ende einer ersten Anschlagsfläche 20 auf. Die Anschlagsfläche 20, wie sie auch in Fig. 2a dargestellt ist, bildet in einer Initialposition den Anschlag für einen freien Federschenkel 28 der Schenkelfeder 30. In Fig. 2 und Fig. 2a ist eine Situation dargestellt, bei der das zweite Bauteil 14 in Sperrrichtung S gegenüber dem ersten Bauteil 12 gedreht wird. Hierbei wird der freie Federschenkel 28 der Schenkelfeder 30 von einem am zweiten Bauteil 14 angeordneten Führungsmittel 24 entgegen der Federkraft F2 mitgenommen. Die in axialer Richtung wirkende Federkraft F1 sorgt für die Aufrechterhaltung des Eingriffs des freien Federschenkels 28 mit dem Führungselement 24. In Sperrichtung S ist das zweite Bauteil 14 gegen die Federkraft F solange bewegbar bis der freie Federschenkel 28 an die zweite Anschlagsfläche 26 des ersten Bauteils 12 anliegt. Bei einer Weiterdrehung in Sperrrichtung S des zweiten Bauteils 14 gegenüber dem ersten Bauteil 12 wird der freie Federschenkel 28 auf die Überlastrampe 26 des ersten Bauteils 12 gegen die Federkraft F1 hinaufgeschoben, wonach im Ergebnis das Führungselement 24 unter dem freien Federschenkel 28 hindurch gleitet, woraufhin der freie Federschenkel 28 durch die Vorspannkraft F2 wieder gegen die erste Anschlagsfläche 20 gedrückt wird.

In Fig. 2a ist gut zu erkennen, dass aufgrund der radialen Innenlage des Führungselements 24 gegenüber der Überlastrampe 26 der Überlastschutz auf einfache Weise realisierbar ist.

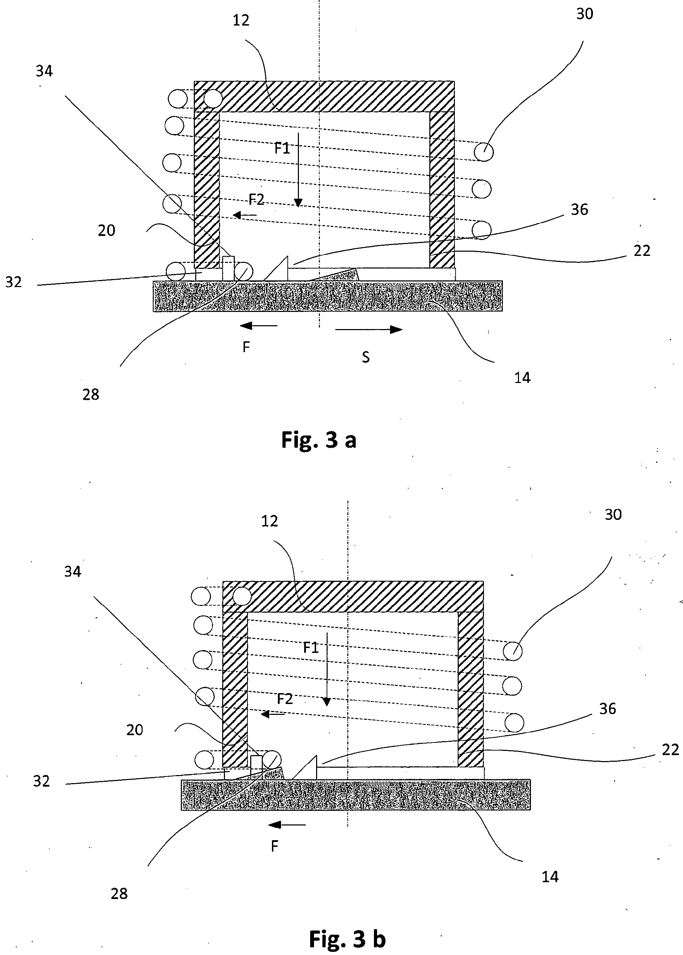

Die Figuren 3a bis 3c zeigen schematische Ansichten eines Kupplungselements in verschiedenen Drehzuständen. Das Kupplungselement 10 umfasst ein erstes Bauteil 12, ein relativ zu diesem drehbares zweites Bauteil 14 sowie einen ebenfalls koaxial zu den ersten und zweiten Bauteilen 12, 14 angeordneten Ring 32.

Ähnlich wie in Fig. 2 beschrieben weist auch gemäß Fig. 3a das zweite Bauteil 14 ein Führungselement 24 auf. Dieses ist bei Drehung in Sperrrichtung S zur Mitnahme des freien Federschenkels 28 geeignet. Die Anschlagsflächen 20, 22 des ersten Bauteils 12 sind so ausgestaltet, dass sie einen Anschlag für den ersten Ringanschlag 34 und den zweiten Ringanschlag 36 bilden. Zwischen dem ersten Ringanschlag 34 und dem zweiten Ringanschlag 36 ist der Ring 32 unterbrochen und erlaubt dem freien Federschenkel 28 ein Durchragen des Ringumfangs um mit dem radial innenliegenden Führungselement 24 in Eingriff gebracht werden zu können (ähnlich Fig. 2a).

In Fig. 3b ist eine Drehung des zweiten Bauteils 14 in Freilaufrichtung F relativ zum ersten Bauteil 12 dargestellt. Da der erste Ringanschlag 34 zwischen erster Anschlagsfläche 20 des ersten Bauteils 12 und dem freien Federschenkel 28 liegt, wird der drehbare Ring 32 in seiner Ausgangslage gegen die erste Anschlagsfläche 20 des ersten Bauteils 12 gedrückt. Bei einer Drehung des zweiten Bauteils 14 in Freilaufrichtung F verbleibt der freie Federschenkel 28 in horizontaler Richtung in dieser Position. Das Führungselement 24 ist in Freilaufrichtung F derart ausgestaltet, dass dieses die Drehung in diese Richtung nicht blockiert, sondern aufgrund seiner rampenförmigen Ausgestaltung die Verschiebung des freien Federschenkels 28 in axialer Richtung gegen die Federkraft F2 ermöglicht. Auf diese Weise ist eine weitgehend freie Drehung des zweiten Bauteils 14 in Freilaufrichtung möglich.

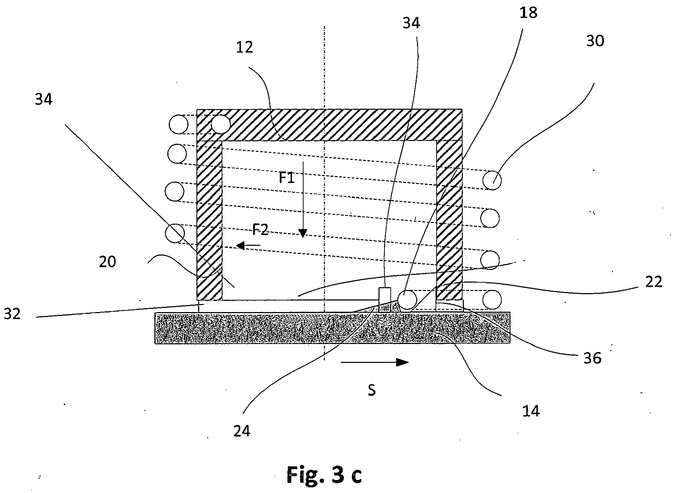

Fig. 3c zeigt einen Zustand bei einer Drehung des zweiten Bauteils 14 in Sperrrichtung S gegenüber dem ersten Bauteil 12. Bei einer Drehung des zweiten Bauteils 14 wird wie vorab beschrieben der freie Federschenkel 28 vom Mitnahmeelement 24 gegen die Federkraft F2 mitgenommen. Der drehbare Ring 32 wird in diesem Fall ebenfalls in Sperrichtung S mitgedreht. Der Ring wird solange gedreht, bis der zweite Ringanschlag 36 an der zweiten Anschlagsfläche 22 des ersten Bauteils 12 anliegt. Bei Weiterdrehung des zweiten Bauteils 14 gegenüber dem ersten Bauteil 12 und somit auch gegenüber dem festliegenden Ring 32 wird der freie Federschenkel 28 durch das Führungselement 24 gegen die Federkraft F1 auf die Rampe des zweiten Ringanschlags solange geschoben bis der freie Federschenkel 28 über das Führungselement 24 hinweg gleitet und gegen den ersten Ringanschlag 34 drückt. Durch die Federkraft F2 wird der Ringanschlag 34 durch den freien Federschenkel 28 unter Drehung des Rings 32 wieder in seine Ausgangslage an der ersten Anschlagsfläche 20 des ersten Bauteils 12 zurückbewegt. Dies entspräche einer wie in Fig. 3a dargestellten Ausgangssituation.

Auf diese Weise ist eine multifunktionale Federanbindung mit Überlastschutz und Freilauffunktion bereitgestellt, die auf universelle Weise die Anbindung unterschiedlichster Stellarmaturen ermöglicht.

### Bezugszeichenliste

- 10: Kupplung
- 12: Bauteil
- 14: Bauteil
- 16: federbelasteter Mitnehmer
- 18: Führungsmittel
- 20: Anschlagsfläche
- 22: Anschlagsfläche
- 24: Erhebung
- 26: Überlastrampe
- 28: freier Federschenkel
- 30: Schenkelfeder
- 32: Ring
- 34: Ringanschlag
- 36: Ringanschlag
- F: Freilaufrichtung
- S: Sperrrichtung

## Patentansprüche

1. Kupplung (10) umfassend ein erstes Bauteil (12) und ein zweites Bauteil (14) und einen federbelasteten Mitnehmer (16), der federnd am ersten Bauteil (12) befestigt ist, ferner das zweite Bauteil (14) drehbar gegenüber dem ersten Bauteil (12) angeordnet ist, wobei das zweite Bauteil (14) in einer ersten Drehrichtung - Freilaufrichtung (F) - und einer dieser entgegengesetzten zweiten Drehrichtung -Sperrrichtung (S) - drehbar ist, ferner weist das zweite Bauteil (12) ein Führungsmittel (18) auf, das derart gestaltet ist, dass der federbelasteter Mitnehmer (16) bei Drehung des zweiten Bauteils (14) in Freilaufrichtung (F) nicht mit dem Führungsmittel (18) in Eingriff gelangt, hingegen bei Drehung des zweiten Bauteils (14) in Sperrrichtung (S) der federbelastete Mitnehmer (16) mit dem Führungsmittel (18) in Eingriff gelangt und so der federbelastete Mitnehmer (16) von dem Führungsmittel (18) in Sperrrichtung (S) gegen eine Federkraft mitgenommen wird, ferner das erste Bauteil (12) eine erste Anschlagsfläche (20) aufweist, an welcher der federbelastete Mitnehmer (16) in seiner Ausgangsposition - bei Drehung des zweiten Bauteils (14) in Freilaufrichtung (F) - anliegt und das erste Bauteil (12) ferner eine zweite Anschlagsfläche (22) aufweist, gegen welche der federbelastete Mitnehmer (16) bei Drehung in Sperrrichtung (S) durch das Führungsmittel (18) am zweiten Bauteil (14) geführt wird, wobei an der zweiten Anschlagsfläche (22) der federbelastete Mitnehmer (16) derart geführt wird, dass bei Drehung in Sperrrichtung (S) der durch das Führungsmittel (18) des zweiten Bauteils (14) geführte federbelastete Mitnehmer (16) gegen eine Federkraft der Eingriff des federbelasteten Mitnehmers (16) mit dem Führungsmittel (18) gelöst wird, wonach sich der federbelastete Mitnehmer (16) wieder in seine Ausgangslage an die erste Anschlagsfläche (20) zurückbewegt.

2. Kupplung nach Anspruch 1, **dadurch gekennzeichnet, dass** das erste Bauteil (12) koaxial zum zweiten Bauteil (14) angeordnet ist, ferner als federbelasteter Mitnehmer (16) ein freier Federschenkel (28) einer Schenkelfeder (30) vorgesehen ist, wobei die Schenkelfeder (30) mit ihrem ersten Ende am ersten Bauteil (12) fixiert ist und mit ihrem freien Federschenkel (28) mit dem Führungsmittel (18) des zweiten Bauteils (14) in Eingriff gelangen kann.

3. Kupplung nach Anspruch 2, **dadurch gekennzeichnet, dass** das zweite Bauteil (14) ein Führungsmittel in Form einer Erhebung (24) in Richtung des ersten Bauteils (12) aufweist, welche in Freilaufrichtung (F) mit einer Flanke versehen ist, und in Sperrrichtung (S) steil abfällt, wobei der freie Schenkel (28) durch die Erhebung (24) bei Drehung des zweiten Bauteils (14) in Sperrrichtung (S) mitgenommen wird, ferner weist das erste Bauteil (12) an seiner zweiten Anschlagsfläche (22) eine Überlastrampe (26) auf, die derart gestaltet ist, dass bei Drehung des zweiten Bauteils (14) in Sperrrichtung (S) der freie Federschenkel (28) so weit in Richtung des ersten Bauteils (12) geschoben wird, bis der freie Federschenkel (28) über die Erhebung (24) hinweggleitet.

4. Kupplung nach Anspruch 3, **dadurch gekennzeichnet, dass** die Überlastrampe (26) in Baueinheit mit dem zweiten Anschlag (22) des ersten Bauteils (12) ausgebildet ist.

5. Kupplung nach einem der Ansprüche 2 bis 4, **dadurch gekennzeichnet, dass** zwischen erstem Bauteil (12) und zweitem Bauteil (14) koaxial ein Ring (32) vorgesehen ist, der drehbar gegenüber dem ersten Bauteil (12) und zweiten Bauteil (14) geführt ist, wobei der Ring (32) einen ersten Ringanschlag (34) aufweist, der in Freilaufrichtung (F) eine erste Ringanschlagsfläche aufweist, die mit der ersten Anschlagsfläche (20) des ersten Bauteils (12) in Freilaufrichtung (F) in Kontakt bringbar ist, wobei der erste Ringanschlag (34) in einer Ausgangslage zwischen freiem Federschenkel (28) und dem ersten Anschlag (20) des ersten Bauteils (12) liegt

6. Kupplung nach einem der Ansprüche 2 bis 5, **dadurch gekennzeichnet, dass** zwischen erstem Bauteil (12) und zweitem Bauteil (14) ein Ring (32) vorgesehen ist, der drehbar gegenüber dem ersten und zweiten Bauteil (12, 14) geführt ist, wobei der Ring einen zweiten Ringanschlag (36) aufweist, der in Sperrrichtung ansteigend die Überlastrampe (26) bildet und im weiteren Verlauf eine Anschlagsfläche bildet, die in Kontakt mit der zweiten Anschlagsfläche (22) des ersten Bauteils (12) bringbar ist.

7. Kupplung nach Anspruch 2 bis 4, **dadurch gekennzeichnet, dass** koaxial zwischen erstem Bauteil (12) und zweitem Bauteil (14) ein Ring (32) vorgesehen ist, der drehbar gegenüber dem ersten Bauteil (12) und dem zweiten Bauteil (14) geführt ist, wobei der Ring (32) einen ersten Ringanschlag (34) aufweist, der in Freilaufrichtung (F) eine erste Ringanschlagsfläche aufweist, die mit der ersten Anschlagsfläche (20) des ersten Bauteils (12) in Freilaufrichtung (F) in Kontakt bringbar ist, wobei der erste Ringanschlag (34) in einer Ausgangslage zwischen dem freien Federschenkel (28) und dem ersten Ringanschlag (34) des ersten Bauteils (12) liegt, wobei der Ring (32) einen zweiten Ringanschlag (36) aufweist, der in Sperrrichtung (S) beabstandet zum ersten Ringanschlag (34) liegt und der zweite Ringanschlag (36) in Sperrrichtung (S) ansteigend die Überlastrampe (26) bildet und im weiteren Verlauf eine Anschlagsfläche (20) bildet, die in Kontakt mit der zweiten Anschlagsfläche (22) des ersten Bauteils (12) bringbar ist.

8. Kupplung nach einem der vorangehenden Ansprüche 2 bis 7, **dadurch gekennzeichnet, dass** die Schenkelfederachse koaxial zu erstem und zweitem Bauelement liegt.

9. Kupplung nach Anspruch 8, **dadurch gekennzeichnet, dass** das erste Bauteil (12) teilweise zylinderförmig ausgebildet ist, wobei der zylinderförmige Teil den Kern der Schenkelfeder (30) durchragt.

10. Kupplung nach Anspruch 9, **dadurch gekennzeichnet, dass** die Erhebung (24) des zweiten Bauteils (14) radial innen liegend zu den Anschlagsflächen (20,22) des ersten Bauteils (12) verläuft.

11. Stellungsregler, wobei der Stellungsregler eine Kupplung nach einem der vogehenden Ansprüche umfasst, über welche der Stellungsregler mit einer Stellarmatur verbindbar ist.

## Claims

1. Coupling (10) comprising a first component (12) and a second component (14) and a spring-loaded entrainer (16) which latter is spring-mounted to said first component (12), said second component (14) furthermore being mounted so as to be rotatable relative to said first component (12), said second component (14) being capable of rotating in a first direction of rotation - the freewheeling direction (F) - and a second opposite direction of rotation - the blocking direction (S), said second component (14) furthermore having guide means (18) designed so as to prevent the spring-loaded entrainer (16) from engaging the guide means (18) during rotation of the second component (14) in the freewheeling direction (F) but to allow the spring-loaded entrainer (16) to engage said guide means (18) and thus result in the guide means (18) entraining the spring-loaded entrainer (16) against a spring force in the blocking direction (S), during rotation of the second component (14) in the blocking direction (S), said first component (12) furthermore having a first locating surface (20) upon which said spring-loaded entrainer (16) rests in its starting position - during rotation of said second component (14) in the freewheeling direction (F) - said first component (12) furthermore having a second locating surface (22) with which the spring-loaded entrainer (16) makes contact as it is being guided by the guide means (18) along the second component (14) during rotation in the blocking direction (S), with the spring-loaded entrainer (16) being guided along the second locating surface (22) in such a manner that - during rotation in the blocking direction (S) - the spring-loaded entrainer (16) guided by the guide means (18) of the second component (14) will be released from its engagement with the guide means (18) against a spring force, whereupon the spring-loaded retainer (16) will return to its starting position where it makes contact with said first locating surface (20).

2. Coupling as claimed in claim 1 **characterized in that** said first component (12) is coaxially mounted relative to said second component (14), furthermore a free spring leg (28) of a leg spring (30) is provided as the spring-loaded retainer (16), which leg spring (30) has a first end thereof firmly secured to said first component (12) whereas its free spring leg (28) is capable of engaging the guide means (18) of the second component (14).

3. Coupling as claimed in claim 2 **characterized in that** the second component (14) includes a guide means in the form of a raised portion (24) in the direction of the first component (12), which raised portion features a slope in the freewheeling direction (F) and a sharp drop in the blocking direction (S), said free leg (28) being entrained by the raised portion (24) during rotation of the second component (14) in the blocking direction, said first component (12) furthermore having an overload ramp (26) on its second locating surface (22) which is designed such that, during rotation of the second component (14) in the blocking direction (S), it will urge the free spring leg (28) far enough in the direction of the first component (12) to ultimately cause it to slide over and past the raised portion (24).

4. Coupling as claimed in claim 3 **characterized in that** the overload ramp (26) forms a single structural unit with the second stop (22) of said first component (12).

5. Coupling as claimed in one of claims 2 to 4 **characterized in that** a ring (32) is coaxially mounted between the first component (12) and the second component (14), which ring is guided so as to be rotatable relative to the first component (12) and the second component (14), said ring (32) having a first ring stop (34) which has a first ring locating surface in the freewheeling direction (F) that can be made to contact the first locating surface (20) of the first component (12) in the freewheeling direction (F), with said first ring stop (34), in its starting position, being located between the free spring leg (28) and the first locating surface (20) of the first component (12).

6. Coupling as claimed in one of claims 2 to 5 **characterized in that** a ring (32) is provided between the first component (12) and the second component (14), which ring is guided so as to be rotatable relative to the first and second components (12,14), said ring having a second ring stop (36) which is a raised portion in the blocking direction and thus forms the overload ramp (26) and in its further extension forms a locating surface which can be made to contact the locating surface (22) of the first component (12).

7. Coupling as claimed in claims 2 to 4 **characterized in that** a ring (32) is coaxially mounted between said first component (12) and said second component (14), which ring is guided so as to be rotatable relative to said first component (12) and said second component (14), said ring (32) having a first ring stop (34) which has a first ring locating surface in the freewheeling direction (F) which surface can be made to contact said first locating surface (20) of said first component (12) in the freewheeling direction (F), with said first ring stop (34), in its starting position, being located between the free spring leg (28) and the first ring stop (34) of the first component (12), said ring (32) having a second ring stop (36) which is spaced from the first ring stop (34) in the blocking direction (S), and the second ring stop (36) is a raised portion in the blocking direction which thus forms the overload ramp (26) and in its further extension forms a locating surface (20) which can be made to contact the second locating surface (22) of said first component (12).

8. Coupling as claimed in one of claims 2 to 7 above **characterized in that** the leg spring axis extends coaxially to said first and second components.

9. Coupling as claimed in claim 8 **characterized in that** the first component (12) is partially cylindrically shaped, with its cylindrical portion extending through and projecting from the core of the leg spring (30).

10. Coupling as claimed in claim 9 **characterized in that** the raised portion (24) of the second component (14) extends radially inwardly relative to the locating surfaces (20, 22) of the first component (12).

11. Positioner, which positioner comprises a coupling as claimed in one of the preceding claims, through which said positioner can be connected to a control valve.

## Revendications

1. Embrayage (10), comprenant un premier élément de construction (12) et un deuxième élément de construction (14) et un entraineur à ressort (16) qui est fixé au premier élément de construction (12) de manière élastique, dans lequel le deuxième élément de construction (14) peut entrer en rotation dans une première direction de rotation/course libre (F) et dans une deuxième direction de rotation/ fermeture (S), le deuxième élément de construction (12) présent en outre un moyen de guidage (18), qui est conçu de telle façon que l'entraineur à ressort (16) lors de la rotation du deuxième élément de construction (14) dans la direction de course libre (F) n'engage pas avec le moyen de guidage (18) mais par contre, lors d'une rotation du deuxième élément de construction en direction de fermeture (S) l'entraineur à ressort (16) entre en engagement avec le moyen de guidage (18) et ainsi l'entraineur à ressort (16) est entrainé par le moyen de guidage (18) en direction de fermeture (S) contre une force élastique, en outre le premier élément de construction (12) dispose d'une première surface de butée (20) à laquelle reste l'entraineur à ressort (16) dans sa position de départ-lors de la rotation du deuxième élément de construction (14) dans la direction de course libre (F) et dans lequel en outre le premier élément de construction (12) dispose d'une deuxième surface de butée (22) contre laquelle l'entraineur à ressort (16) est guidé à travers le moyen de guidage (18) au deuxième élément de construction lors d'une rotation en direction de fermeture, l'entraineur à ressort (16) est guide de telle façon à la deuxième surface de butée que lors de la rotation en direction de fermeture (S) l'entraineur à ressort guidé à travers le moyen de guidage (18) du deuxième élément de construction (14) est libéré contre une force élastique l'engagement d'entraineur à ressort (16) avec le moyen de guidage (18), termes duquel l'entraineur à ressort (16) se retrace en sa positon de départ à la première surface de butée.

2. Embrayage selon la revendication 1, **caractérisé en ce que** le premier élément de construction (12) est agencé de manière coaxiale par rapport au deuxième élément de construction et en outre, il est prévu une branche de ressort (28) d'un ressort à branches (30) comme entraineur à ressort (16), le ressort à branches (30) étant fixé au premier élément de construction (30) avec sa première extrémité et peut s'engager au moyen de guidage (18) du deuxième élément de construction avec sa branche de ressort (28) libre.

3. Embrayage selon la revendication 2, **caractérisé en ce que** le deuxième élément de construction (14) dispose d'un moyen de guidage sous forme d'une élévation (24) en direction du premier élément de construction (12), ladite élévation est pourvue d'un flanc et qui est fortement inclinée en direction de fermeture (S), le ressort (28) libre était entrainé par l'élévation (24) lors de la rotation du deuxième élément de construction (14) en direction de fermeture (S), le premier élément (12) comprend en outre, à sa deuxième surface de butée (22) une rampe de surcharge (26) qui est conçue de telle façon, que lors une rotation du deuxième élément de construction (14) en direction de fermeture (S) la branche de ressort (28) libre est déplacé vers le premier élément de construction (12) si loin, jusqu'à la branche de ressort (28) libre coulisse par-dessus de l'élévation (24).

4. Embrayage selon la revendication 3, **caractérisé en ce que** la rampe de surcharge (26) est formée en une unité modulaire avec la deuxième butée (22) du premier élément de construction (12).

5. Embrayage selon l'une des revendications 2 à 4, **caractérisé en ce que** un anneau (32) est prévu de manière coaxiale entre le premier élément de construction (12) et le deuxième élément de construction, ledit anneau est guidé de façon rotative par rapport au premier élément de construction (12) et le deuxième élément de construction (14), ledit anneau (12) présentant une première butée d'anneau (34), qui présente une première surface de butée d'anneau en direction de course libre (F) qui peut être mise en contact avec la première surface de butée (20), la première butée d'anneau (34) situant dans une position de départ entre la branche de ressort (28) libre et la première butée (20) du premier élément de construction (12).

6. Embrayage selon l'une des revendications 2 à 5, **caractérisé en ce que** un anneau (32) est prévu entre le premier élément de construction (12) et le deuxième élément de construction (14) qui est guidé de façon rotative par rapport au premier élément de construction (12) et au deuxième élément de construction (14), l'anneau présentant une deuxième butée d'anneau (36) qui constitue la rampe de surcharge (26) en direction de fermeture montée et qui par la suite constitue une surface de butée qui peut être mise en contact avec la deuxième surface de butée (22) du premier élément de construction (12).

7. Embrayage selon les revendications 2 à 4, **caractérisé en ce que** un anneau (32) est prévu de manière coaxiale entre le premier élément de construction (12) et le deuxième élément de construction (14), ledit anneau est guidé de façon rotative par rapport au premier élément de construction (12) et au deuxième élément de construction (14), l'anneau présentant une première butée d'anneau (34) en direction de course libre (F) qui peut être mise en contact avec la première surface de butée (20) du premier élément de construction (12) en direction de course libre (F), la première butée d'anneau (34) en une position de départ se trouvant entre la branche de ressort (28) libre et la première butée (20) du premier élément de construction (12), l'anneau (32) présentant un deuxième butée d'anneau (36) qui se trouve en direction de fermeture (S) espacé de la première butée d'anneau (34) et la deuxième butée d'anneau (36) constitue la rampe de surcharge (26) en direction de fermeture montée qui peut être mis en contact avec la deuxième surface de butée (22) du premier élément de construction (12).

8. Embrayage selon l'une des revendications précédentes 2 à 7, **caractérise en ce que** l'axe du ressort à branches se trouve coaxiale par rapport au premier et deuxième élément de construction.

9. Embrayage selon la revendication 8, **caractérisé en ce que** le premier élément de construction (12) est partiellement conçu en forme d'un cylindre, le part cylindrique traversant le centre du ressort à branche.

10. Embrayage selon la revendication 8, **caractérisé en ce que** l'élévation (24) de deuxième élément de construction (14) s'étend de façon radiale interne par rapport aux surfaces de butée (20, 22) du premier élément de construction (12).

11. Positionneur, ledit positionneur comprenant un couplage selon l'une des revendications précédentes, au moyen dudit couplage le positionneur peut être relié avec une armature de positionnement.
